Europäisches Patentamt

European Patent Office

Office européen des brevets

(19)

(11) Numéro de publication: **0 087 373**
**A1**

# (12) DEMANDE DE BREVET EUROPEEN

(21) Numéro de dépôt: 83400375.8

(22) Date de dépôt: 23.02.83

(51) Int. Cl.³: **G 01 L 5/24**
**B 25 B 23/14, E 21 B 19/16**

(30) Priorité: 24.02.82 FR 8203050

(43) Date de publication de la demande:
31.08.83 Bulletin 83/35

(84) Etats contractants désignés:
AT BE CH DE IT LI LU NL SE

(71) Demandeur: **VALLOUREC Société Anonyme dite.**
**7, place du Chancelier Adenauer**
**F-75116 Paris(FR)**

(72) Inventeur: **Plaquin, Bernard**
**15, Rond Point des Acacias**
**F-59620 Aulnoye Aymeries(FR)**

(74) Mandataire: **Nony, Michel**
**29, rue Cambacérès**
**F-75008 Paris(FR)**

(54) **Procédé et dispositif pour s'assurer du vissage correct d'un joint tubulaire comportant une butée de limitation de vissage.**

(57) Procédé et dispositif pour s'assurer de l'assemblage correct de joints tubulaires vissés comportant au moins une butée de limitation de vissage. Lors du vissage, on mesure en continu le couple de vissage, on détermine à chaque instant la valeur de la dérivée seconde du couple de vissage, et on vérifie que le maximum de cette dérivée seconde excède une valeur prédéterminée.

Le dispositif comporte en combinaison : un moyen pour convertir en tension électrique (14a, 14b, 15a, 15b) la valeur du couple de serrage appliquée à chaque instant lors du vissage du joint, un dispositif électronique (19, 20) pour effectuer le calcul de la dérivée seconde de la courbe de tension électrique ainsi mesurée, et un dispositif (22, 23, 24, 25) permettant de comparer la valeur de cette dérivée seconde avec une valeur de référence pour signaler lorsque le maximum de la dérivée seconde excède ou n'excède pas la valeur de référence.

Fig.10

0087373

-1-

Procédé et dispositif pour s'assurer du vissage correct
d'un joint tubulaire comportant une butée de limitation
de vissage

La présente invention est relative à un nouveau procédé et à un dispositif pour le mettre en oeuvre, qui permettent de contrôler que le
vissage d'un joint tubulaire fileté comportant au moins une butée
limitation de vissage, s'est effectué correctement.

On connaît des joints tubulaires filetés utilisés en particulier dans
l'industrie pétrolière et notamment dans les puits de pétrole qui comportent des filetages coniques ou cylindriques ainsi qu'au moins une
butée solidaire d'un des éléments pour limiter le vissage lors de
l'assemblage des deux éléments.

Il est déjà également connu de réaliser l'assemblage de tels joints en
appliquant un couple de vissage qui est compris à l'intérieur d'une zone
de valeurs prédéterminées, le couple de vissage étant appliqué par un
dispositif qui permet de le mesurer.

Cette manière de faire ne donne pas entièrement satisfaction car il peut
se produire qu'en raison, par exemple, de la présence d'un corps étranger tel qu'un copeau métallique dans le lubrifiant des filetages, ou
qu'à la suite d'un grippage au niveau des filetages, le couple maximum
prédéterminé soit atteint par suite d'une résistance au vissage anormalement élevée et sans que les surfaces de butée de limitation de
vissage viennent correctement au contact l'une de l'autre. Il en résulte
un serrage défectueux du joint car dans cette hypothèse les surfaces
d'étanchéité ne sont généralement pas en contact ou ne le sont que d'une
manière non satisfaisante.

La présente invention a pour objet un nouveau procédé et un nouveau
dispositif qui permettent d'éliminer cet inconvénient d'une manière
simple et peu coûteuse.

-2-

La présente invention a pour objet un procédé pour s'assurer de l'assemblage correct de joints tubulaires vissés comportant au moins une butée de limitation de vissage, caractérisé par le fait que, lors du vissage, on mesure en continu le couple de vissage en fonction du temps, que l'on détermine à chaque instant la valeur de la dérivée seconde du couple de vissage par rapport au temps, et que l'on vérifie que le maximum de cette dérivée seconde excède une valeur prédéterminée.

Dans un mode de mise en oeuvre particulier plus perfectionné du procédé selon l'invention, on vérifie également lors du vissage que le couple de vissage ne dépasse pas la valeur nominale minimale prescrite avant que la dérivée seconde du couple excède la valeur prédéterminée pour cette dérivée. On s'assure ainsi en outre que lorsque le couple nominal de vissage a été atteint le maximum de la dérivée seconde du couple qui a été constaté n'était pas dû à un autre phénomène aberrant qui se serait produit après le processus normal du vissage du joint.

Ce procédé peut être mis en oeuvre conformément à l'invention en mesurant le couple de vissage exercé entre les deux éléments tubulaires à l'aide par exemple d'un capteur à jauges de contraintes qui permet de transformer instantanément sous forme de tension électrique la valeur du couple de vissage exercé entre les deux éléments tubulaires.

Un dispositif électronique de type connu permet de calculer en temps réel la dérivée seconde par rapport au temps de la courbe de tension ainsi obtenue et il suffit de comparer la valeur de cette dérivée seconde à une valeur de seuil pour déterminer si le maximum de cette courbe dépasse ou non le seuil prédéterminé.

Pour s'assurer que selon le mode de mise en oeuvre particulier décrit ci-dessus, le couple de vissage atteint sa valeur nominale minimum après le maximum de sa dérivée seconde. On peut par exemple alimenter un système de bascules à l'aide de deux portes ET recevant des tensions qui correspondent à l'excès du couple et de sa dérivée seconde par rapport à leurs valeurs de seuil.

-3-

Dans une variante de l'invention l'on mesure en permanence le couple de vissage et la dérivée seconde de ce dernier non par rapport au temps mais par rapport au déplacement angulaire de l'un des éléments par rapport à l'autre lors du vissage.

Cette rotation ou déplacement angulaire peut être facilement mesuré grâce à des dispositifs de types connus qui permettent d'engendrer un nombre donné d'impulsions électriques qui est directement proportionnel à la rotation d'un élément tubulaire par rapport à l'autre.

La dérivée du couple par rapport au déplacement angulaire est alors égale à la différence entre les couples mesurés aux moments de deux impulsions consécutives et la dérivée seconde est égale à la différence entre les dérivées premières de deux intervalles d'impulsions consécutifs. Ces différents calculs peuvent être facilement réalisés avec un micro-processeur ou mini micro-ordinateur de type connu.

Il résulte des expériences qui ont été faites par la Société demanderesse, que ce procédé permet de déterminer d'une manière parfaitement fiable si un joint tubulaire à butée de limitation de vissage a été correctement vissé, c'est-à-dire si le couple de serrage qui s'est exercé lors du vissage est dû au fonctionnement normal du joint ou s'il est dû à un incident de fonctionnement tel qu'un grippage ou la présence d'un corps étranger au niveau des filetages.

En effet, d'une manière générale, le couple nécessaire au serrage d'un joint tubulaire de ce type croît progressivement d'une manière assez lente lorsque le filetage est conique (ou reste sensiblement égal à lui-même lorsque le filetage est cylindrique), puis augmente pendant une courte période avec une proportionnalité assez faible, lors du rapprochement des surfaces d'étanchéité, après quoi le couple augmente brutalement lorsque les surfaces de limitation de vissage viennent en contact. Ceci tout au moins lorsque le serrage du joint s'effectue dans des conditions normales.

Il en résulte que lorsque les surfaces de limitation de vissage viennent au contact, il se produit une variation brusque de la pente, c'est-à-dire de la dérivée première de la courbe du couple qui se traduit par une valeur élevée de la dérivée seconde du couple.

Tout au contraire, lorsque le serrage du joint s'effectue de manière anormale, le couple de vissage augmente d'une manière sensiblement progressive qui n'entraîne pas de variation brusque de la dérivée du couple ce qui se traduit par des valeurs toujours relativement faibles de la dérivée seconde.

On conçoit dans ces conditions qu'en mesurant la valeur maximale de la dérivée seconde du couple par rapport au temps, ou par rapport au déplacement angulaire d'un élément par rapport à l'autre, l'on peut déterminer de manière simple si le joint a été correctement vissé.

La présente invention a également pour objet un nouveau dispositif pour mettre en oeuvre le procédé défini ci-dessus, ce dispositif étant caractérisé par le fait qu'il comporte en combinaison : un moyen pour convertir en tension électrique la valeur du couple de serrage appliqué à chaque instant lors du vissage du joint ; un dispositif électronique pour effectuer le calcul de la dérivée seconde de la courbe de tension électrique ainsi mesurée ; et un dispositif permettant de comparer la valeur de cette dérivée seconde avec une valeur de référence pour signaler lorsque le maximum de la valeur de la dérivée seconde n'excède pas la valeur de référence ce qui est le signe d'un serrage défectueux du joint.

Dans un mode de réalisation préféré le couple de vissage est compensé par une biellette reliée en un point fixe, les efforts axiaux exercés sur la biellette permettant de déterminer la valeur du couple de vissage.

Le dispositif permettant de transformer le couple de vissage en tension électrique peut être de type connu et peut faire appel par exemple à des jauges de contraintes qui dans le mode de réalisation particulier décrit ci-dessus sont placées sur la biellette. De même on connaît déjà des dispositifs qui permettent à l'aide d'un amplificateur, d'un condensateur et d'une résistance d'obtenir la dérivée d'une tension par rapport au temps. L'utilisation successive de deux tels dispositifs permet d'obtenir la dérivée seconde.

Dans le but de mieux faire comprendre l'invention, on va en décrire maintenant à titre d'illustration et sans aucun caractère limitatif, un mode de réalisation pris comme exemple et représenté sur le dessin annexé.

Sur ce dessin :

- la figure 1 représente schématiquement l'évolution normale du couple de vissage en fonction du temps, pour un joint à filetages coniques d'une part et pour un joint à filetages cylindriques d'autre part,

- la figure 2 correspond à la figure 1 dans le cas où le vissage s'effectue de manière anormale.

- les figures 3 et 4 représentent les courbes des dérivées premières par rapport au temps des couples représentés respectivement sur les figures 1 et 2.

- les figures 5 et 6 représentent les dérivées secondes par rapport au temps des couples de vissage représentés sur les figures 1 et 2.

- la figure 7 représente schématiquement un dispositif permettant la mise en oeuvre du procédé selon l'invention.

- la figure 8 est une vue à plus grande échelle de la partie VIII de la figure 7.

- la figure 9 est une vue en coupe selon IX-IX de la figure 8.

-6-

- et la figure 10 est un schéma d'un dispositif électronique qui permet de mettre en oeuvre le procédé selon l'invention.

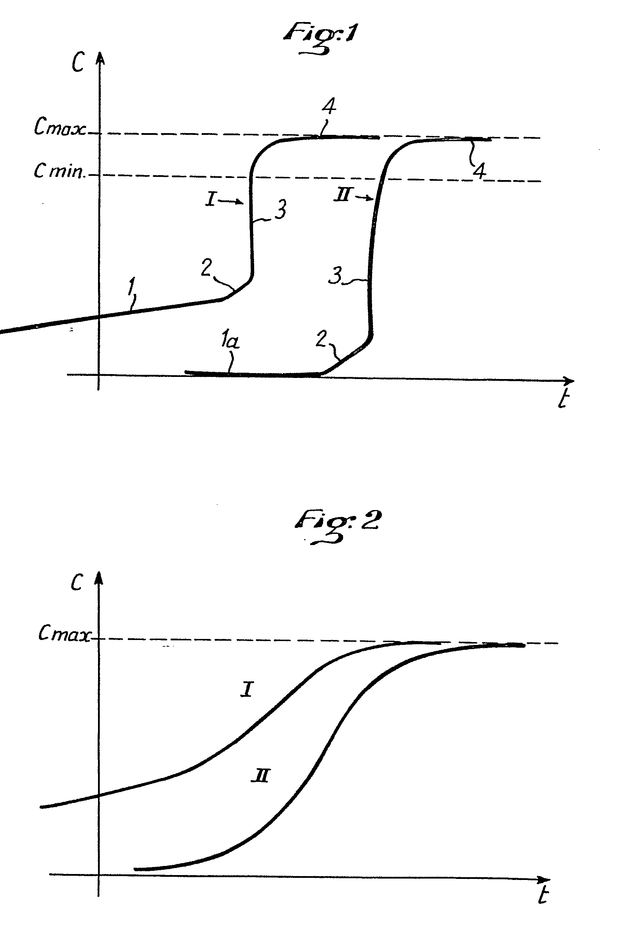

On a représenté sur la figure 1 les courbes I et II qui représentent l'évolution de la valeur du couple de serrage d'un joint en fonction du temps.

La courbe I correspond au cas d'un joint à filetage conique frettant qui comporte des surfaces d'étanchéité qui viennent en contact avant que ne viennent en contact les surfaces des butées de limitation de vissage.

C'est ainsi que la courbe I présente une partie 1 croissant légèrement qui correspond à l'augmentation du couple dû à l'engagement des filetages de l'élément mâle dans ceux de l'élément femelle.

La partie 2 de la courbe correspond à l'augmentation de la pression de contact des surfaces d'étanchéité alors que la partie 3 de la courbe qui croît très rapidement correspond à la phase où les surfaces de limitation de vissage viennent buter l'une contre l'autre.

La partie 4 correspond à la valeur maximum Cmax du couple de vissage qui est effectivement appliqué.

On retrouve sur la courbe II qui correspond à un joint à filetage cylindrique les mêmes parties de courbes 2, 3 et 4 qui correspondent au serrage successif des surfaces d'étanchéité et des surfaces de limitation de vissage. Cependant, compte-tenu du fait que les filetages cylindriques n'exercent aucun frettage, la partie 1a de la courbe II reste plate alors que la partie 1 de la courbe I qui correspond à des filetages tronconiques croît légèrement.

On a représenté sur la figure 2 les courbes correspondant au serrage des joints de la figure 1 mais dans l'hypothèse où le vissage s'effectue dans des conditions anormales en raison soit du grippage des filetages soit encore par exemple de la présence d'un corps étranger dans les filetages.

On remarque dans ces conditions, que la courbe du couple par rapport au temps se présente sous la forme générale d'un S allongé qui est dû au fait que le grippage ou le corps étranger provoque une augmentation relativement régulière du couple de serrage de telle sorte que les différentes parties 1, 2, 3 ou 1a, 2 et 3 ont pratiquement disparu.

On a représenté sur la figure 3 la courbe de la dérivée du couple par rapport au temps correspondant à chacune des courbes I et II de la figure 1.

On remarque que la partie 1 de la courbe I de la figure 1 correspond au palier 1 de la figure 3 (courbe I), que la partie 2 de la courbe I de la figure 1 correspond au palier 2 de la figure 3, que la partie 3 de la courbe I de la figure 1 correspond au maximum 3 de la figure 3 et que le palier 4 du couple maximum de la courbe I de la figure 1 correspond à la partie 4 de la figure 3.

La courbe II de la figure 3 a une allure analogue à celle de la courbe I, la seule différence étant constituée par le fait que le palier 1a a une valeur nulle alors que le palier 2 de la courbe II est dans ce mode de réalisation à un niveau inférieur à celui de la courbe I.

On voit clairement que les parties 1 ou 1a de la figure 1 qui se raccordent angulairement aux parties 2 qui elles-mêmes se raccordent angulairement aux parties 3 donnent des paliers successifs sur les courbes des dérivées de la figure 3.

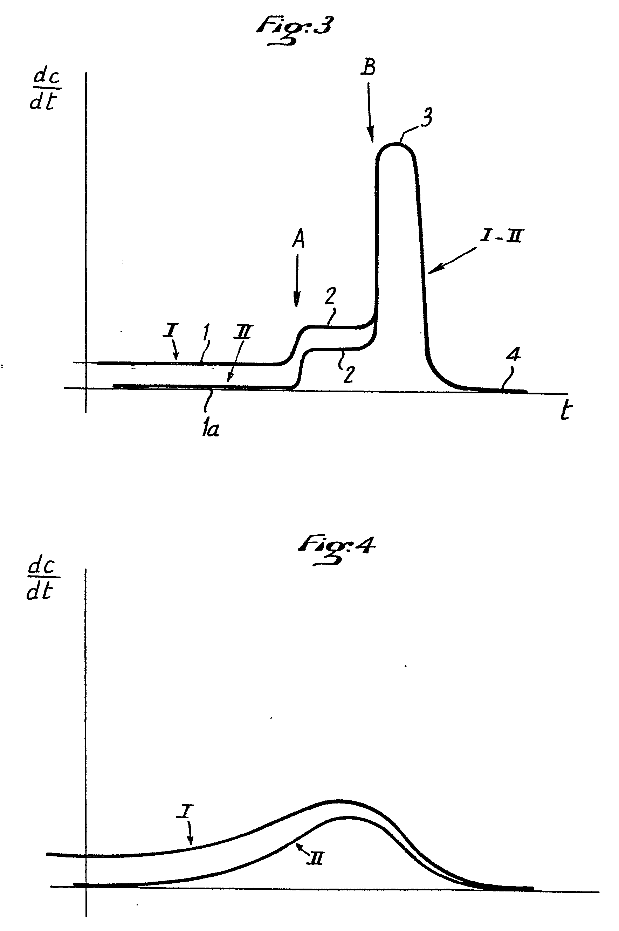

Tout au contraire, en raison de l'absence de variations brusques du couple sur les courbes de la figure 2, on remarque sur la figure 4 que les dérivées premières du couple par rapport au temps varient de manière continue et avec la forme générale d'une courbe à maximun très arrondi lorsqu'il se produit un incident lors du vissage du joint.

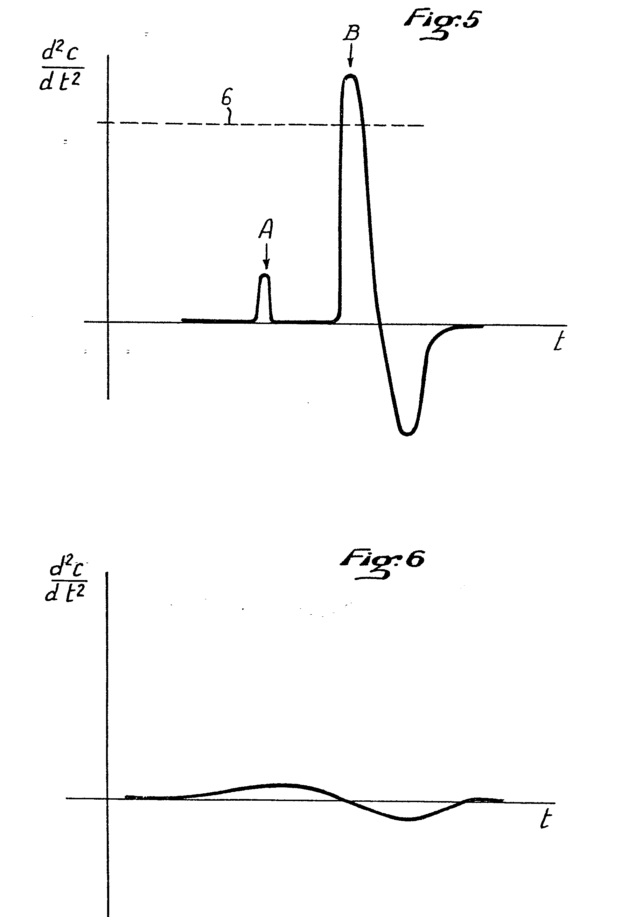

On a représenté sur la figure 5 la courbe de la dérivée seconde par rapport au temps des courbes représentant les couples de vissage de la figure 1.

On remarque sur cette figure 5 que les zones A et B de variation rapide de la valeur de la dérivée première sur la figure 3 correspondent à des pics sur la courbe de la dérivée seconde de la figure 5 dans le cas d'un vissage correct.

On remarque au contraire que la dérivée seconde du couple de vissage par rapport au temps qui est représentée sur la figure 6 dans le cas d'un serrage anormal du joint dû par exemple au grippage des filetages ou à la présence d'un corps étranger dans les filetages, se présente sous une forme ondulée très aplatie.

On conçoit dans ces conditions qu'en mesurant la valeur du pic B de la courbe de la dérivée seconde de la figure 5 et en comparant cette valeur à une valeur de référence indiquée par exemple par le trait interrompu 6, il est possible de déterminer avec précision si le vissage du joint a été effectué ou non dans des conditions normales.

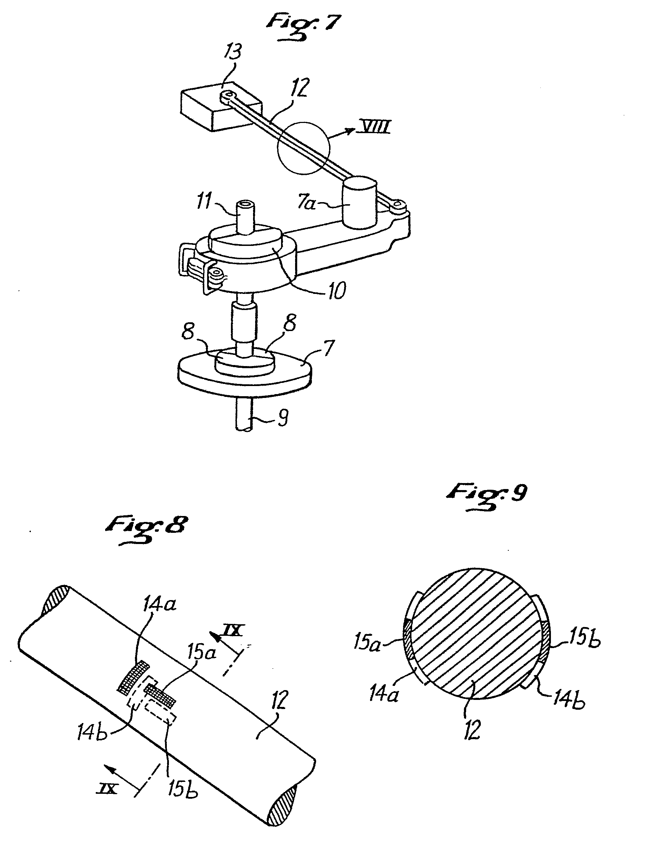

Sur la figure 7 qui représente schématiquement un dispositif pour la mise en oeuvre de l'invention, on retrouve les dispositifs classiques pour le serrage des joints sur une tête de puits qui comporte une table tournante 7 munie de mâchoires 8 susceptibles d'immobiliser la partie inférieure 9 du tube et un dispositif de mâchoires tournantes 10 qui peuvent venir enserrer la partie supérieure du tube 11 et l'entraîner en rotation à l'aide d'un moteur 7a par un dispositif connu non représenté.

Pour la mise en oeuvre du procédé selon l'invention, et d'une manière tout à fait conventionnelle, la table tournante 7 est immobilisée en rotation et l'entraînement en rotation de la partie 11 du tube par le moteur 7a et par les mâchoires tournantes 10 tend à faire tourner l'ensemble supportant les mâchoires 10 et le moteur 7a autour de l'axe du tube avec un couple égal au couple de vissage. Pour éviter la rotation de l'ensemble du dispositif, celui-ci est relié par une bielle 12 à une partie fixe 13.

Selon un mode de réalisation particulier du dispositif selon l'invention la mesure du couple s'effectue à l'aide de jauges de contraintes placées sur la biellette 12 schématiquement représentée sur la figure 7.

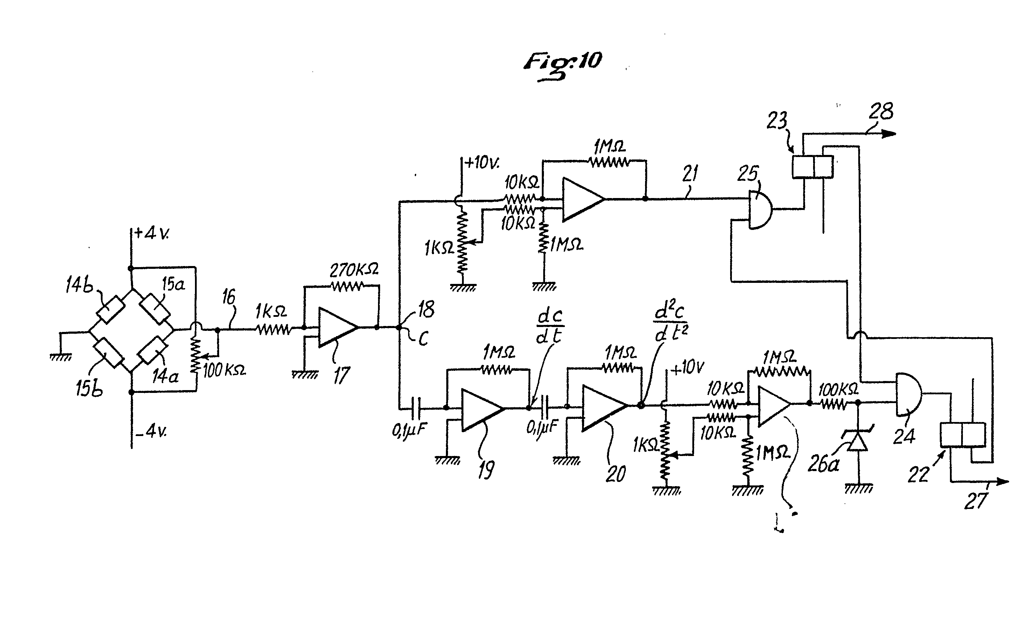

On a représenté, à plus grande échelle sur les figures 8 et 9 comment quatre jauges de contraintes 14a, 14b et 15a, 15b sont disposées deux par deux circonférenciellement et longitudinalement sur la biellette 12.

On sait qu'en mesurant la variation des résistances électriques de ces quatre jauges de contraintes il est possible de déterminer les contraintes longitudinales qui sont appliquées sur la biellette 12 lesquelles sont directement proportionnelles au couple de vissage exercé par les mâchoires tournantes 10 sur la partie supérieure 11 du joint dont la partie inférieure 9 est immobilisée.

La figure 10 représente un mode de réalisation d'un dispositif électronique qui permet de déterminer à partir des indications qui lui sont fournies par ces jauges de contraintes si le vissage du joint s'est effectué dans des conditions normales ou non.

On retrouve sur la figure 10 les jauges de contraintes 14a, 14b et 15a, 15b qui sont montées de manière conventionnelle. Une résistance variable de 100 kilos-ohms permet de régler la tension au point 16 à zéro lorsque le couple est nul. La tension d'alimentation et les dimensions de la biellette 12 sont telles que dans le mode de réalisation décrit la tension du point 16 est d'environ 10 millivolts pour un couple de 1000 mètre-kilos. Un amplificateur 17 permet d'obtenir au point 18 une tension d'environ 2 volts pour un couple de 1000 mètre-kilos. Cette tension est proportionnelle au couple C.

Un dispositif 19 constitué par un amplificateur associé à une capacité permet d'obtenir la dérivée $dC/dt$ du couple puis un second dispositif 20 constitué par un amplificateur associé à une capacité permet d'obtenir la dérivée seconde du couple $d^2C/dt_2$.

Un dispositif 26 comportant un amplificateur et une résistance variable permet de déterminer un seuil réglable correspondant à la valeur 6 de la figure 5 et d'envoyer sur la porte ET 24 une tension correspondant à l'excès de la dérivée seconde par rapport à la valeur de seuil réglable, cette tension étant elle-même soumise à un limiteur d'amplitude 26a.

Parallèlement un dispositif conventionnel comportant notamment un amplificateur et une résistance variable de 1 kilo-ohm permet d'obtenir en 21 une tension qui est égale à l'excès de la valeur instantanée du couple de vissage par rapport à la valeur du couple nominal minimum auquel le joint doit être serré, la résistance variable permettant d'ajuster cette dernière valeur.

A l'aide d'un dispositif conventionnel comportant deux bascules 22 et 23 qui sont alimentées par deux portes ET 24 et 25, la porte 24 reçoit la tension correspondant à l'excès de la dérivée seconde par rapport au seuil de référence alors que la porte 25 reçoit la tension qui correspond à l'excès du couple de serrage par rapport au couple nominal minimum.

Ce dispositif à bascules connu permet d'obtenir à la fin du vissage un signal en 27 uniquement lorsque la dérivée seconde atteint sa valeur de seuil (6, figure 5) avant que le couple nominal minimum (Cmin, figure 1) ait été atteint. Dans le cas contraire (couple nominal minimum avant le pic de la dérivée seconde) un signal est envoyé en 28.

On obtient ainsi en 27 une signalisation permettant d'afficher que le vissage est effectué de manière correcte et en 28 un signal permettant d'afficher que le vissage est effectué d'une manière anormale.

On voit que le dispositif selon l'invention dont un mode de réalisation particulier vient d'être décrit permet d'obtenir avec des moyens simples un procédé pour déterminer si le vissage d'un joint du type décrit ci-dessus s'est effectué dans des conditions satisfaisantes.

-11-

Il va de soi que les modes de réalisation qui ont été décrits ci-dessus ne sont donnés qu'à titre purement indicatif et qu'ils pourront recevoir toutes modifications désirables sans sortir pour cela du cadre de l'invention.

Il existe en effet de nombreux moyens qui permettent de mesurer instantanément un couple et d'en calculer la dérivée seconde. Il est évident que l'utilisation d'autres dispositifs ou des moyens équivalents ne sortirait pas du cadre de l'invention. En particulier il est clair que selon l'invention, il n'est pas indispensable de vérifier que le couple de serrage dépasse sa valeur nominale minimum après le pic de mise en oeuvre décrit ci-dessus.

De même, l'invention n'est nullement limitée à un type de joint particulier et il suffit pour pouvoir mettre en oeuvre le procédé qui a été décrit que le joint comporte des butées de limitation de vissage qui procurent lors du vissage normal une augmentation brusque du couple de vissage.

Revendications de brevet

1. Procédé pour s'assurer de l'assemblage correct de joints tubulaires vissés comportant au moins une butée de limitation de vissage, caractérisé par le fait que lors du vissage, on mesure en continu le couple de vissage, que l'on détermine à chaque instant la valeur de la dérivée seconde du couple de vissage, et que l'on vérifie que le maximum de cette dérivée seconde excède une valeur prédéterminée.

2. Procédé selon la revendication 1, caractérisé par le fait que l'on détermine la dérivée seconde du couple par rapport au temps.

3. Procédé selon la revendication 2, caractérisé par le fait que l'on détermine la dérivée seconde du couple par rapport au déplacement angulaire relatif des deux éléments de tube.

4. Procédé selon l'une quelconque des revendications précédentes, caractérisé par le fait que l'on mesure le couple de vissage excercé entre les deux éléments tubulaires à l'aide d'un capteur à jauges de contraintes.

5. Procédé selon l'une quelconque des revendications précédentes caractérisé par le fait que l'on vérifie que le couple de vissage dépasse sa valeur nominale minimum de serrage.

6. Procédé selon la revendication 5, caractérisé par le fait que l'on vérifie que le couple de vissage dépasse sa valeur nominale minimum de serrage après que sa dérivée seconde ait excédé sa valeur de seuil.

7. Dispositif pour mettre en oeuvre le procédé selon l'une quelconque des revendications précédentes, caractérisé par le fait qu'il comporte en combinaison : un moyen pour convertir en tension électrique la valeur du couple de serrage appliquée à chaque instant lors du vissage du joint, un dispositif électronique pour effectuer le calcul de la dérivée seconde de la courbe de tension électrique ainsi mesurée, et un dispositif permettant de comparer la valeur de cette dérivée seconde avec une valeur de référence pour signaler lorsque le maximum de la dérivée seconde excède ou n'excède pas la valeur de référence.

8. Dispositif selon la revendication 7, caractérisé par le fait que le couple de vissage est compensé par une biellette assujettie en un point fixe et munie de jauges de contraintes pour permettre la mesure des contraintes axiales qui s'exercent sur elle et la détermination de la valeur du couple de vissage.

9. Dispositif selon l'une quelconque des revendications 7 et 8, caractérisé par le fait que l'on obtient la dérivée seconde par rapport au temps de la tension correspondant au couple à l'aide de deux dispositifs connus successifs permettant d'obtenir la dérivée d'une tension à l'aide d'un amplificateur, d'un condensateur et d'une résistance.

10. Dispositif selon l'une quelconque des revendications 7 à 9, caractérisé par le fait qu'il comporte des dispositifs de valeurs de seuil réglables permettant d'actionner un dispositif de bascules par l'intermédiaire de portes ET lorsque la dérivée seconde et le couple excèdent successivement leurs valeurs de seuil pour signaler que le vissage a été effectué de manière satisfaisante.

Fig:1

Fig:2

Fig.3

Fig.4

Fig.5

Fig.6

**Fig. 7**

**Fig. 8**

**Fig. 9**

Fig:10

Office européen
des brevets

**RAPPORT DE RECHERCHE EUROPEENNE**

0087373

Numéro de la demande

EP  83 40 0375

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | EP-A-0 018 115 (C.W.CALHOUN) <br><br> *Résumé; page 5, lignes 1-6* | 1,4,5, 7,8 | G 01 L   5/24 <br> B 25 B  23/14 <br> E 21 B  19/16 |
| A | US-A-4 013 895 (T.AKIYOSHI et al) <br> *Colonne 4, lignes 8-13; figure 4* | 1,3,7 | |
| A | US-A-4 104 780 (J.A.SIGMUND) <br> *Résumé; figures* | 1,7 | |

**DOMAINES TECHNIQUES RECHERCHES (Int. Cl. ³)**

G 01 L    5/24
B 25 B   23/14
B 23 P   19/06C
E 21 B   19/16
G 05 D   17/02

Le présent rapport de recherche a été établi pour toutes les revendications

| Lieu de la recherche <br> LA HAYE | Date d'achèvement de la recherche <br> 31-05-1983 | Examinateur <br> VAN ASSCHE P.O. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82